(19)

Europäisches
Patentamt

European
Patent Office

Office européen
des brevets

(11) **EP 2 172 819 A2**

(12) **EUROPEAN PATENT APPLICATION**

(43) Date of publication:
**07.04.2010 Bulletin 2010/14**

(51) Int Cl.:
***G05B 19/4065*** *(2006.01)*

(21) Application number: **09167654.4**

(22) Date of filing: **11.08.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **27.08.2008 TW 97132731**

(71) Applicant: **China Steel Corporation
Kaohsiung 81233 (TW)**

(72) Inventor: **Wu, Chung-Yung
81233, Kaohsiung (TW)**

(74) Representative: **2K Patentanwälte Blasberg
Kewitz & Reichel
Partnerschaft
Corneliusstraße 18
60325 Frankfurt am Main (DE)**

(54) **Method for evaluating grinding state**

(57) The method for evaluating a grinding state of the invention includes the following steps: (a) acquiring a vibration signal; (b) calculating a spectrum of the vibration signal, in which the spectrum has a plurality of harmonics; (c) removing a low frequency part of the harmonics; (d) removing a part of the harmonics with an energy lower than an amplitude threshold; (e) calculating a spectrum wave signal according to the harmonics having a predetermined calculation number and a predetermined interval of the harmonics; and (f) evaluating the grinding state according to the spectrum wave signal. Whereby, the invention can accurately calculate a grinding rotation speed of a grinding device, simplify a grinding chatter monitoring system, reduce a number of sensing devices (tachometers), reduce wiring and line maintenance costs, and evaluate whether the grinding device contacts a workpiece or not.

EP 2 172 819 A2

**Description**

**BACKGROUND OF THE INVENTION**

**1. Field of the Invention**

The present invention relates to a method for evaluating a grinding state, and more particularly to a method for evaluating a grinding state by using a vibration signal.

**2. Description of the Related Art**

During a process of grinding a roller, a periodical relative motion exists between a grinding device (sand wheel) and a workpiece (roll). The relative motion results in a periodical variation in the grinding depth, thus causing a wave-shaped change on the roll surface, which is called the grinding roll mark, and a vibration behavior resulting in the surface defect is called grinding chatter.

Generally, the severity of the grinding roll mark is directly proportional to the grinding chatter energy, and a certain relation exists between a pitch ($\lambda$) and a vibration frequency, and the relation is shown as follows:

$$\lambda = \text{work roller linear speed/chatter frequency}$$

For example, for a cylindrical grinding machine, the chatter frequency is a positive integer times a rotation speed of the sand wheel. If the rotation speed of the sand wheel and a natural frequency of the grinding machine system are known, the chatter frequency scope can be pre-evaluated, thereby setting a vibration monitoring frequency scope to monitor the chatter. Therefore, the common chatter monitoring requires a set of vibration measuring systems, and a set of tachometers, for providing information related to the rotation speed.

During the conventional grinding process, the chatter monitoring requires a plurality of sensing devices (tachometers), thereby increasing rotation speed measuring points to obtain the rotation speed signal, so that the structure and wiring of the monitoring system are much more complicated, and the maintenance cost is high.

Therefore, it is necessary to provide a method for evaluating a grinding state, so as to solve the above problem.

**SUMMARY OF THE INVENTION**

The present invention provides a method for evaluating a grinding state, which can be used to evaluate the grinding state of a grinding device when grinding a workpiece. The method for evaluating the grinding state includes the following steps: (a) acquiring a vibration signal; (b) calculating a cepstrum of the vibration signal, in which the cepstrum has a plurality of rahmonics; (c) removing a low quefrency part of the rahmonics; (d) removing a part of the rahmonics with an energy lower than an amplitude threshold; (e) calculating a cepstrum wave signal according to the rahmonics having a predetermined calculation number and a predetermined interval of the rahmonics; and (f) evaluating the grinding state according to the cepstrum wave signal.

In the present invention, the grinding state (for example, a grinding rotation speed and the wheel-roll contact condition) of the grinding device is evaluated by only using the vibration signal. In addition, the grinding rotation speed evaluated by using the method for evaluating the grinding state of the present invention can be further used for the chatter monitoring and diagnosis, serving as a soft sensing device. Further, the method for evaluating the grinding state of the present invention can accurately calculate the grinding rotation speed of the grinding device. Even if there is strong interference, the signal is still quite accurate, for example, when the signal is strongly interfered with by the movement of a nearby crane, the cepstrum still reflects the accurate rotation speed message, thereby omitting the rotation speed measuring point, and simplifying the monitoring system. Therefore, in the present invention, the rotation speed measuring point in the monitoring system can be omitted, thereby simplifying the grinding chatter monitoring system and reducing the number of the sensing devices (tachometers), the wiring and the line maintenance cost. Further, the method for evaluating the grinding state of the present invention can evaluate whether the grinding device contacts the workpiece or not during a grinding process.

**BRIEF DESCRIPTION OF THE DRAWINGS**

FIG. 1 is a flow chart of a method for evaluating a grinding state according to the present invention;

FIG. 2 is a schematic view of a log spectrum according to the present invention;

FIG. 3 is a schematic view of a cepstrum according to the present invention;

FIG. 4 is a schematic view of calculating rahmonic peaks according to a number of rahmonics and an interval of the rahmonics according to the present invention; and

FIG. 5 is a comparison view of results of a grinding rotation speed calculated by using the method for evaluating the grinding state of the present invention and the grinding rotation speed measured by using a tachometer.

## DETAILED DESCRIPTION OF THE INVENTION

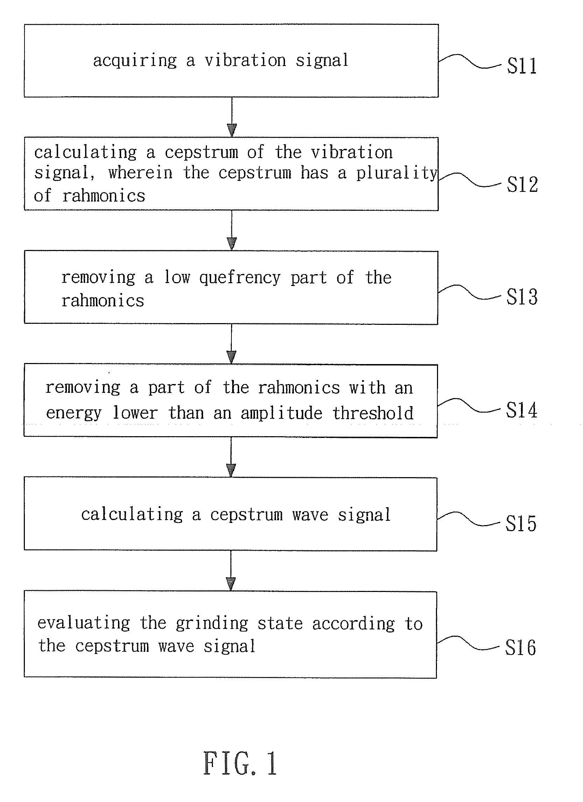

FIG. 1 is a flow chart of a method for evaluating a grinding state according to the present invention. The method for evaluating the grinding state is used to evaluate the grinding state of a grinding device when grinding a workpiece. In this embodiment, the method for evaluating the grinding state is used to evaluate a grinding rotation speed of the grinding device. The grinding device has a lowest possible grinding rotation speed and a highest possible grinding rotation speed. In Step S11, a vibration signal is acquired and processed in a finite length of window. The vibration signal can be selectively acquired from the grinding device or the workpiece.

In Step S12, a cepstrum of the vibration signal is calculated, and the cepstrum has a plurality of rahmonics. The definition of the cepstrum has many different versions, but a basic version is an inverse Fourier transform of a log spectrum, which is represented by equation (1) as follows:

$$C(\tau) = \Im^{-1}(\log S_{xx}(f)) \qquad (1)$$

$C(\tau)$ is the cepstrum, $S_{xx}$ is a double-sided power spectrum, and equation (1) is a calculation reference mainly used by subsequent rule development. $S_{xx}$ is a real number and is a symmetric function, so $C(\tau)$ is also a real number and a symmetric function. If an original waveform has N points, a final cepstrum has N/2 points with identical resolutions and sampling rates.

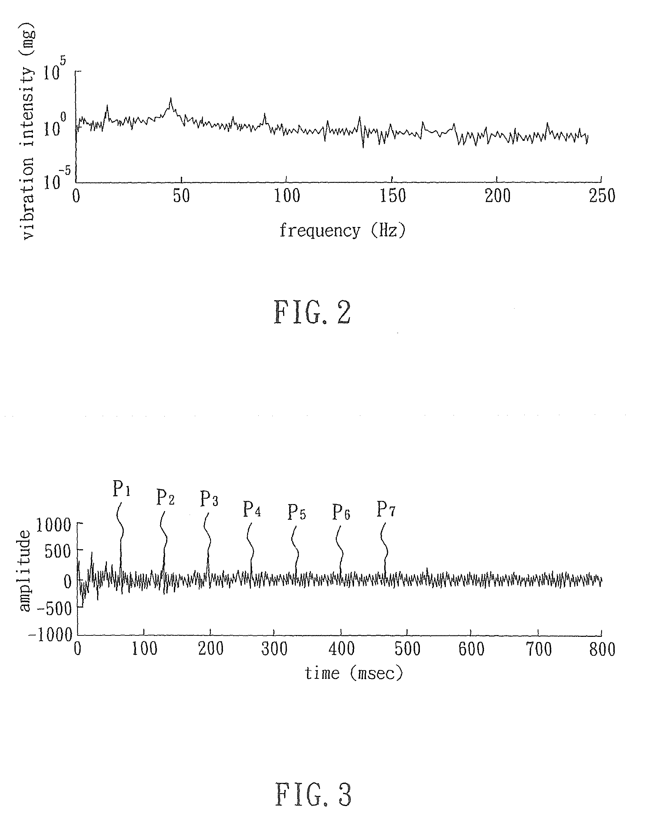

In addition, the cepstrum emphasizes spectrum lines with equal intervals in the spectrum, which is the same as an autocorrelation spectrum in part, so $\tau$ in the equation (1) represents a repeated period of a certain component in the signal. If the interval of the spectrum lines at equal intervals in the spectrum is $\Delta f$, a wave peak occurs at $\tau=1/\Delta f$ in the cepstrum. As shown in FIG. 2, in the log spectrum, it can be found that the signals at equal intervals (the wave peaks at equal intervals) exist. As shown in FIG. 3, in the cepstrum, it can be clearly found that the spectrum shows the components at equal intervals (wave peaks $P_1$ to $P_7$).

Although the cepstrum is quite similar to the autocorrelation spectrum, on the basis of the chatter analysis, the autocorrelation spectrum is quite inappropriate, and the reasons are as follows.

The autocorrelation spectrum can be calculated by using $R(\tau) = \Im^{-1}(S_{xx}(f))$, and the largest difference between the autocorrelation spectrum and the cepstrum is that a log of $S_{xx}$ is taken in the cepstrum, and the log can highlight weaker signals, so that the cepstrum is superior to the autocorrelation spectrum on harmonic frequencies detection. In addition, in the autocorrelation spectrum, the distinct repeated period may not be wholly shown, and only the main peak component in the linear spectrum is shown. Further, when the energy is concentrated, being affected by the main frequency, the autocorrelation spectrum cannot show the signals at equal intervals and having smaller energy. During the generation of the chatter, usually the energy is concentrated, so even though the autocorrelation spectrum is quite similar to the cepstrum, the autocorrelation spectrum is not quite appropriate for the chatter analysis.

In Step S13, a low quefrency part of the rahmonics is removed. In a cepstrum transforming process, usually the amount of noise from the low quefrency part is quite large, and the reason is that few components with higher frequency intervals exist in the spectrum. In addition, a gamitude of the rahmonic is reduced as the quefrency is increased, and thus, the signal noise ratio (SNR) in the part with a higher quefrency is much lower and does not help identification.

In this embodiment, in the step of removing the low quefrency part of the rahmonics, a low quefrency cutoff threshold is calculated according to the highest possible grinding rotation speed, and the cepstrum value lower than the low quefrency cutoff threshold is set to 0 according to the low quefrency cutoff threshold, so as to remove the low quefrency part of the cepstrum.

In Step S14, according to an amplitude threshold, a part of the rahmonics with energy lower than the amplitude threshold is removed. The judgment becomes much easier by removing the low energy components of the cepstrum. In the cepstrum, the rahmonics having the gamitude value lower than the amplitude threshold is set to 0, and the rahmonics having the gamitude higher than the amplitude threshold maintains the original value, so as to obtain a cepstrum waveform C. The waveform of the cepstrum is a few surges with quite narrow widths, so a noise floor energy in the cepstrum is nearly equivalent to a root mean square (RMS) value of the gamitude of the rahmonic, so that the value of the amplitude threshold can be set to the equivalent peak. In this embodiment, the amplitude threshold (th) can be represented by an equation (2) as follows:

$$th = RMS(C) \times \sqrt{2} \quad (2)$$

That is, the amplitude threshold is on a maximum position of the noise floor.

In Step S15, a cepstrum wave signal is calculated according to the rahmonics having a predetermined calculation number and a predetermined interval of the rahmonics. In this embodiment, the calculated cepstrum wave signal has a plurality of rahmonic peaks. The predetermined interval is calculated according to the lowest possible grinding rotation speed, the highest possible grinding rotation speed, and a sampling rate of the vibration signal. The predetermined interval is an integer, and is between a ratio of the sampling rate to the highest possible grinding rotation speed and a ratio of the sampling rate to the lowest possible grinding rotation speed. Preferably, 4 is selected as the predetermined calculation number of the rahmonics, and 1-4 is selected as the predetermined interval of the rahmonics.

In Step S15, a peak match function is further defined, as shown in an equation (3):

$$\mathrm{P}(n) = \sum_{i=1}^{m} C_1(ni) \quad (3)$$

Here, $m$ represents the number of the calculated rahmonics, and $n$ is the interval of the rahmonics. The larger $m$ represents more considered surges, and thus, a reciprocal ($1/f_0$) of the grinding rotation speed can be highlighted. However, approximately four surges normally occur in the cepstrum, so the value of $m$ is preferably 4. $n$ relates to the grinding rotation speed, and is between the reciprocal of the highest possible grinding rotation speed and the reciprocal of the lowest possible grinding rotation speed (second). It should be noted that a horizontal axis in the cepstrum is the time, and the resolution is an original sampling frequency, so the value of $n$ is between $[f_s/22]$ and $[f_s/10]$, in which the bracket [] represents taking an integer off, and $f_s$ is the sampling rate.

In addition, in this embodiment, the method preferably further includes calculating a spectrum identification scope according to the lowest possible grinding rotation speed and the highest possible grinding rotation speed. The spectrum identification scope is between the reciprocal of the highest possible grinding rotation speed and the reciprocal of the lowest possible grinding rotation speed (second).

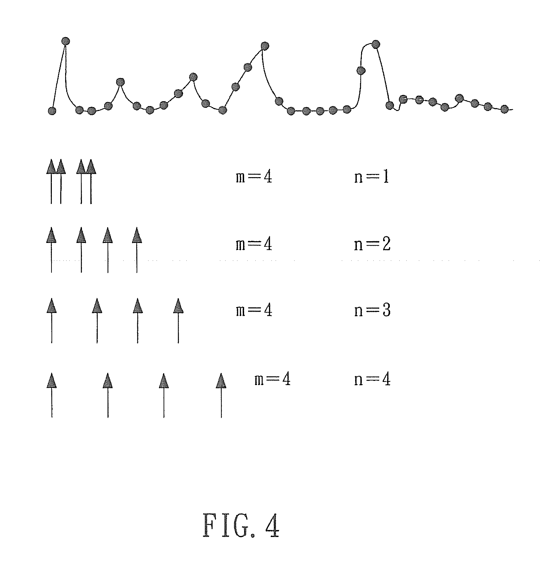

Referring to FIG. 4, a schematic view of the present invention is shown, in which the number of the calculated rahmonics in the cepstrum is 4, the rahmonic interval is 1-4, and the arrows represent the $C_1$ points selected from the cepstrum wave C. As shown in FIG. 4 and Step S15, in the peak match function, the position of the maximum value in the selected $C_1$ points is the reciprocal of the grinding rotation speed. In the cepstrum, the obtained rahmonic peaks are distributed at equal intervals, and the rahmonic peaks are within the spectrum identification scope. The interval is the repeated period of a certain component (the grinding rotation speed of the grinding device in the present invention) of the cepstrum.

In Step S16, the grinding state is evaluated according to the cepstrum wave signal. In this embodiment, the grinding rotation speed is calculated according to the intervals of the rahmonic peaks, which are corresponding to integer mutiples of the reciprocal of the grinding rotation speed.

Therefore, when the grinding device contacts the workpiece, the component of the reciprocal of the grinding rotation speed occurs in the cepstrum, as shown in an equation (4):

$$C_p = \frac{1}{f_o}, \frac{2}{f_o}, \frac{3}{f_o}, \frac{4}{f_o} \cdots \quad (4)$$

Here, $C_p$ is the position of the peak of the cepstrum, with a unit of second, and $f_o$ is the grinding rotation speed of the grinding device, with a unit of Hz.

It should be noted that the maximum gamitude in the cepstrum is not necessarily the reciprocal of the grinding rotation speed, and sometimes occurs on $2/f_0$, $1/2f_0$, or other positions which do not relate to the grinding rotation speed. Therefore, the grinding rotation speed cannot be determined directly according to the maximum peak position of the gamitude in the cepstrum. It must be emphasized that in the cepstrum, the rahmonic peaks are distributed at equal intervals, that is, the rahmonic peaks occur on the positions of $1/f_0$, $2/f_0$, $3/f_0$, $4/f_0$... In accordance with the characteristic, the signals related to the grinding rotation speed can be intensified.

Through observation, experience and practical verification, the first four rahmonics, i.e., $1/f_o$, $2/f_o$, $3/f_o$, and $4/f_o$, have the relatively distinct rahmonic peaks. Therefore, before the rahmonic peaks are identified, a spectrum identification scope is preferably firstly defined, and the identification scope is related to the grinding frequency (working frequency). If the lowest possible grinding rotation speed and the highest possible grinding rotation speed (the rotation speed of a major axis of the grinding device) of the grinding device are respectively $f_l$ and $f_h$, the upper and lower limits of the spectrum identification scope are set to $[1/f_h, 4/f_l]$. For example, if the scope of the lowest possible grinding rotation speed and the highest possible grinding rotation speed of the major axis of the grinding machine is between 10 and 22 Hz, the spectrum identification scope is limited between 45 and 400 msec.

It should be noted that when a common grinding device (for example, a sand wheel) is idle, the signal showing that the dynamic balance of the grinding device is poor mainly occurs, the frequency is mainly the single frequency, and thus no distinct component occurs in the cepstrum, that is, no message occurs in the cepstrum. Therefore, if in Step S15, the calculated cepstrum wave signal does not have the rahmonic peaks distributed at equal intervals, in Step S16, it is determined that the grinding state does not contact the workpiece.

However, during the grinding process, the major axis of the grinding device is slightly bent by reason of a grinding force, and a rotation speed harmonic frequency is generated during rotation, so that the grinding rotation speed of the grinding device can be calculated by using the method for evaluating the grinding state according to the present invention. Therefore, in addition to accurately calculating the grinding rotation speed of the present invention, the method is also adapted to determine whether the grinding device contacts the workpiece or not.

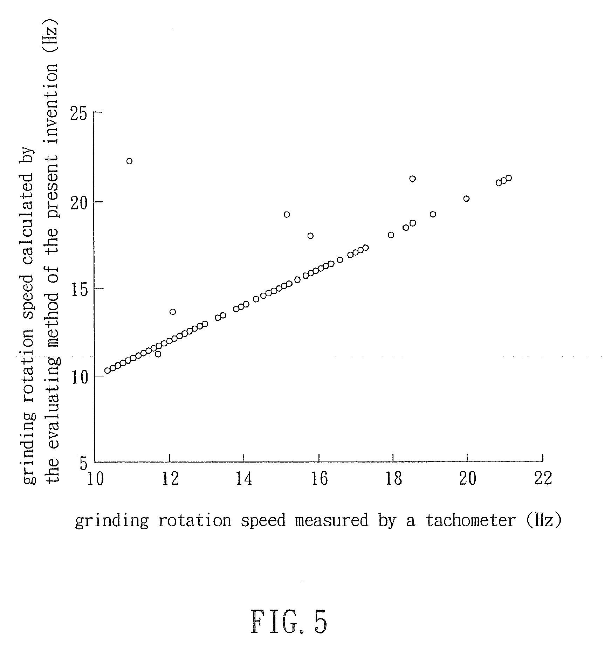

Referring to FIG. 5, a comparison view of results of the grinding rotation speed calculated by using the method for evaluating the grinding state of the present invention and the grinding rotation speed measured by using the tachometer is shown. 286 batches of comparison data exist. In the 286 batches of data, 280 batches of data with an error smaller than 1% exist, which make up 97.6% of the total. It is thus shown that the method for evaluating the grinding state of the present invention can surely and accurately calculate the grinding rotation speed of the grinding device.

In the present invention, the grinding state (for example, the grinding rotation speed) of the grinding device is evaluated by only using the vibration signal. In addition, the grinding rotation speed evaluated by using the method of the present invention can be further used for the chatter monitoring and diagnosis, thus serving as a soft sensing device. Further, the method for evaluating the grinding state of the present invention can accurately calculate the grinding rotation speed of the grinding device even if there is strong interference with the signal. For example, when the signal is strongly interfered with by the movement of a crane, the cepstrum still reflects the accurate rotation speed message. Therefore, in the present invention, the necessity of requiring rotation speed measuring points in the monitoring system is eliminated, which in turn simplifies the grinding chatter monitoring system and reduces the number of the sensing devices (tachometers) and the wiring and line maintenance costs. Furthermore, the method for evaluating the grinding state of the present invention can evaluate whether the grinding device contacts the workpiece or not during a grinding process.

While the embodiments of the present invention have been illustrated and described, various modifications and improvements can be made by those skilled in the art. The embodiments of the present invention are therefore described in an illustrative but not restrictive sense. It is intended that the present invention may not be limited to the particular forms as illustrated, and that all modifications that maintain the spirit and scope of the present invention are within the scope as defined in the appended claims.

## Claims

1. A method for evaluating a grinding state, for evaluating the grinding state of a grinding device when grinding a workpiece, the method is **characterized in** comprising the steps of:

(a) acquiring a vibration signal;
(b) calculating a cepstrum of the vibration signal, wherein the cepstrum has a plurality of rahmonics;
(c) removing a low quefrency part of the rahmonics;
(d) removing a part of the rahmonics with an energy lower than an amplitude threshold;
(e) calculating a cepstrum wave signal according to a predetermined calculation number of rahmonics and a predetermined interval of the rahmonics; and
(f) evaluating the grinding state according to the cepstrum wave signal.

2. The method according to Claim 1, wherein in Step (e), if the cepstrum wave signal does not have rahmonic peaks distributed at equal intervals, in Step (f), an evaluated grinding state is evaluated as that the grinding device does not contact with the workpiece.

3. The method according to Claim 1, wherein the grinding state shows a grinding rotation speed of the grinding device, in Step (a), the vibration signal is acquired and processed in a finite length of window, in Step (e), the cepstrum wave signal has a plurality of rahmonic peaks, in Step (f), the grinding rotation speed is evaluated according to the interval of the rahmonic peaks.

4. The method according to Claim 3, wherein the grinding device has a lowest possible grinding rotation speed and a highest possible grinding rotation speed, the method further comprises a step of calculating a low quefrency cutoff threshold according to the highest possible grinding rotation speed, and in Step (c), a cepstrum value lower than the low quefrency cutoff threshold is set to 0, so as to remove the low quefrency part of the rahmonics.

5. The method according to Claim 3, wherein in Step (c), the amplitude threshold is calculated according to a gamitude root mean square (RMS) value of the rahmonics.

6. The method according to Claim 5, wherein in Step (d), the part of the rahmonics having the gamitude value lower than the amplitude threshold is set to 0.

7. The method according to Claim 4, further comprising calculating a spectrum identification scope according to the lowest possible grinding rotation speed and the highest possible grinding rotation speed.

8. The method according to Claim 7, wherein the spectrum identification scope is between a reciprocal of the highest possible grinding rotation speed and a reciprocal of the lowest possible grinding rotation speed.

9. The method according to Claim 8, wherein in Step (e), the rahmonic peaks are within the spectrum identification scope.

10. The method according to Claim 4, wherein in Step (e), the predetermined interval of the rahmonics is calculated according to the lowest possible grinding rotation speed, the highest possible grinding rotation speed, and a sampling rate of the vibration signal, wherein the predetermined interval is an integer, and the predetermined interval is between a ratio of the sampling rate to the highest possible grinding rotation speed and a ratio of the sampling rate to the lowest possible grinding rotation speed.

11. The method according to Claim 10, wherein in Step (e), the predetermined calculation number of the rahmonics is 4, and the predetermined interval of the rahmonics is 1-4.

12. The method according to Claim 3, wherein in Step (e), the rahmonic peaks are distributed at equal intervals.

13. The method according to Claim 3, wherein in Step (f), the spacing of the rahmonic peaks corresponding to integer multiples of a reciprocal of the grinding rotation speed.

14. The method according to Claim 3, wherein Step (e) further comprises defining a peak match function, for calculating a number and positions generated from rahmonic peaks.

acquiring a vibration signal — S11

calculating a cepstrum of the vibration signal, wherein the cepstrum has a plurality of rahmonics — S12

removing a low quefrency part of the rahmonics — S13

removing a part of the rahmonics with an energy lower than an amplitude threshold — S14

calculating a cepstrum wave signal — S15

evaluating the grinding state according to the cepstrum wave signal — S16

FIG. 1

FIG. 2

FIG. 3

8

FIG. 4

FIG. 5